# EUROPEAN PATENT SPECIFICATION

(11) **EP 2 206 641 B1**
(45) Date of publication and mention of the grant of the patent: **15.02.2012**
(21) Application number: 10150326.6
(22) Date of filing: 08.01.2010
(51) Int. Cl.: B62D 59/04

(54) **Auxiliary drive for a trailer**
Hilfsantrieb für einen Anhänger
Entraînement auxiliaire pour une remorque

(30) Priority: 09.01.2009 NL 2002407
(43) Date of publication of application: 14.07.2010
(73) Proprietor: Reich GmbH, 35713 Eschenburg (DE)
(72) Inventor: Sijbranda, Sjoerd, 4921 SP Made (NL); Beijersbergen van Henegouwen, Cornelis Martin, 5314 AP Bruchem (NL)
(74) Representative: Ketelaars, Maarten F.J.M.

(56) References cited:
- EP-A- 1 225 090
- EP-A- 1 394 024
- US-A- 3 826 324

## Description

The present invention relates to an auxiliary drive for a trailer, to a trailer provided with a drive of this type and to a support structure for drive motors.

Auxiliary drives of this type are generally known in the art. The rotatable drive member can comprise a drive roll, a gear wheel or the like which can in some manner temporarily enter into engagement with the wheel in question. Because the drive is not effective during displacement over long distances on the road, the drive will be moved away from the wheel in question and the towing vehicle can move the trailer forward unimpeded.

The prior art has proposed manual systems for displacing the drive member, including or not including the electric motor thereof, with respect to a crossbar which is fixed to the chassis below the trailer. EP 1 394 024 A2 discloses an example of this. Linear movements, that is to say movements in the direction of travel, are proposed for this purpose and other proposals relate to a hinged construction, the drive member being mounted with a long arm with respect to the crossbar. Systems of this type are mechanized with electric motors. Particularly complex constructions are known in this regard for providing a sufficient press-on force between the drive roll and the tyre in order to prevent slippage.

Systems of this type arc all complex and require the displacing, from both sides of the caravan, of the drive rolls or other drive members to the tyres or other parts of the wheel.

US patent specification 3 826 324 describes a system with a central crossbar which extends below the chassis of a trailer and to the ends of which drive motors are attached. By means of a lever construction with two cables, the crossbar can rotate about the longitudinal axis thereof and the fact that the drive rolls acting on the wheels are attached eccentrically with respect to the axis of the crossbar allows engagement with the wheels to be obtained or cancelled. Operation takes place using a lever to be displaced by the user. It is necessary to use complex structures because the user cannot operate both the lever for pressing the roll against the wheel and the electric motors which drive the roll.

The object of the present invention is to provide a simplified structure, wherein both manual and mechanized displacing of the drive members, such as drive rolls, to the tyres is possible, but which is on the other hand easy to embody. In addition, it is important that the structure can be mounted in such a way that the ground clearance of the caravan does not decrease, that is to say that the structure does not protrude excessively below the caravan or other type of trailer.

This object is achieved by an auxiliary drive as described hereinbefore, having the features of Claim 1.

The present invention starts from the idea that a single reciprocating linear movement of the central crossbar, to which both the left and the right rotatable drive members are attached, can be sufficient to press the drive rolls on the wheels or to otherwise bring them into engagement therewith. After all, it is desirable in all situations for both drive rolls to press against the tyres. Starting from this insight, it is possible to move the central crossbar with respect to the trailer and not to displace, as in the prior art, the separate rotatable drive members with respect to the crossbar. This allows a considerable saving of costs to be obtained. In addition, the fastening of the crossbar to the chassis will always be comparatively rigid so that, after the attaching in such fastening of displacement means for mutual displacement with respect to the chassis or another part of the bottom of the trailer, no particular structural measures are necessary in order to transmit the press-on force of the drive rolls in the chassis or other part of the bottom and without deformation of the parts in question, such as the crossbar, occurring. Likewise, as a result of the fact that the crossbar is displaceable, the reactive forces generated by the pressing-on of the rolls against the wheels are introduced into the chassis in as uniform a manner as possible, so that in principle no special measures have to be taken in order to make the chassis suitable for the attaching of an auxiliary drive. That is to say, displacement of the drive rolls from and to the wheel can be obtained without many additional costs with, for example, a simple guide of the crossbar with respect to the auxiliary frame. In addition, a distribution of forces between the left and right wheels can be provided. The displacement can take place both manually and by motor, such as electrically, pneumatically, hydraulically, etc. In these cases, a (screw) jack, cylinder, tilting lever, scissor construction or the like can be used. It is possible to use a central drive to the crossbar or, if for example use is made of two fastenings of the crossbar with respect to the chassis, to utilize two jacks or other actuators. In the case of displacement by motor of the crossbar with respect to the auxiliary frame, the motor in question can be securely fastened to the auxiliary frame and operate the crossbar using a screw/nut construction, for example. A construction wherein the motor is located on the crossbar and rests against the auxiliary frame with a screw/nut construction, jack or other structure is also possible.

In principle, the drive members can be mounted so as to be non-displaceable with respect to the crossbar.

However, according to a particular embodiment of the invention, there is adjustability between the drive members and the crossbar. Preferably, this adjustability is also substantially in the longitudinal direction. On the one hand, it is possible to achieve a presetting with this structure. That is to say, the crossbar can be mounted in a comparatively imprecise manner with respect to the undercarriage of the trailer, wherein a construction allowing merely a displacement of a few centimetres can be used for the displacing of the crossbar back and forth with respect to the undercarriage. A construction of this type can produce high forces in order to provide a high press-on force of the drive rolls on the tyres. The additional adjustability of the drive members with respect to the crossbar allows the drive roll or other drive member to be placed, starting from this initial mounting of the crossbar, very precisely in the desired starting position. A presetting of this type need occur only during initial mounting. Subsequently, displacement of the crossbar with respect to the undercarriage of the towed vehicle can take place as desired with a comparatively short distance. On the other hand, it is possible to actively use this further adjustability, that is to say adjustability between the drive roll and crossbar. This allows greater total adjustability of the drive roll with respect to the chassis to be obtained. This can be important in constructions wherein the displacement of the wheel during loading thereof is such that considerable displacement of the drive roll with respect to the wheel is necessary in order to avoid undesirable contact. The extent of the displacement of the crossbar with respect to the chassis and of the roll with respect to the crossbar can be selected as a function of the requirements.

The crossbar can be positioned in any adjustable manner with respect to the chassis of the trailer. Thus, it is possible to suspend the trailer with arms and to move the crossbar forwards and backwards respectively using a hinging movement. However, according to an advantageous embodiment, use is made of a sliding movement extending in the horizontal bottom plane of the trailer. In addition, it is possible to select the drive for the crossbar in any conceivable manner. Linear guides, tilting guides, manual operation and/or operation by motor can be used therefor. A few non-limiting examples of this will be given in the description of the figures.

Because the crossbar is comparatively rigid - a 50 x 50 mm box profile is preferably used - the auxiliary frame can be positioned comparatively close to the centre of the trailer. That is to say, it is possible to attach many essential structural parts, in addition to any chassis bars present, in the direction of the centre of the caravan, avoiding problems concerning insufficient overall height.

The invention also relates to a trailer provided with the auxiliary drive described hereinbefore. The auxiliary frame described hereinbefore, which displaceably receives the crossbar, can be fastened in any manner to the bottom plate, chassis structure or undercarriage. It is possible to attach the auxiliary frame later with bolt structures, but it is also possible for an auxiliary frame of this type to already form part of the trailer during production thereof and for the auxiliary drive described hereinbefore, and more particularly the crossbar with the rotatable drive member fastened thereto, to be possible attached later.

In addition, the invention relates to a support structure for an auxiliary drive for a trailer, comprising a frame with a crossbar, which crossbar is provided at each end with fastening means for the fastening thereto of a drive motor and with an auxiliary frame provided with fastening means for fastening to a trailer, said support structure comprising a motor-driven structure, said crossbar with said motor-driven structure being linearly displaceable with respect to that auxiliary frame.

A support structure of this type can be used to convert existing auxiliary drives or to provide them therewith already during fitting. That is to say, the support structure is fastened to the trailer in the manner described hereinbefore and using the possibilities for embodiment described hereinbefore, and a drive motor with a roll and the like is attached thereto.

The invention will be elucidated hereinafter based on exemplary embodiments illustrated in the drawings, in which:
Fig. 1 is a side view of a caravan as an example of a trailer;
Fig. 2 is a plan view of a part of the chassis of the caravan shown in Fig. 1 with a first embodiment of an auxiliary drive according to the invention;
Fig. 3 is a view according to Fig. 2 of a further embodiment of the auxiliary drive according to the invention;
Fig. 4 is a perspective view of a further variant of the present invention;
Fig. 5 shows schematically a further embodiment of the invention;
Fig. 6a, 6b show schematically a further embodiment of the invention, Fig. 6a showing the active state and Fig. 6b showing the non-active state; and
Fig. 7a, 7b show a further variant of the invention.

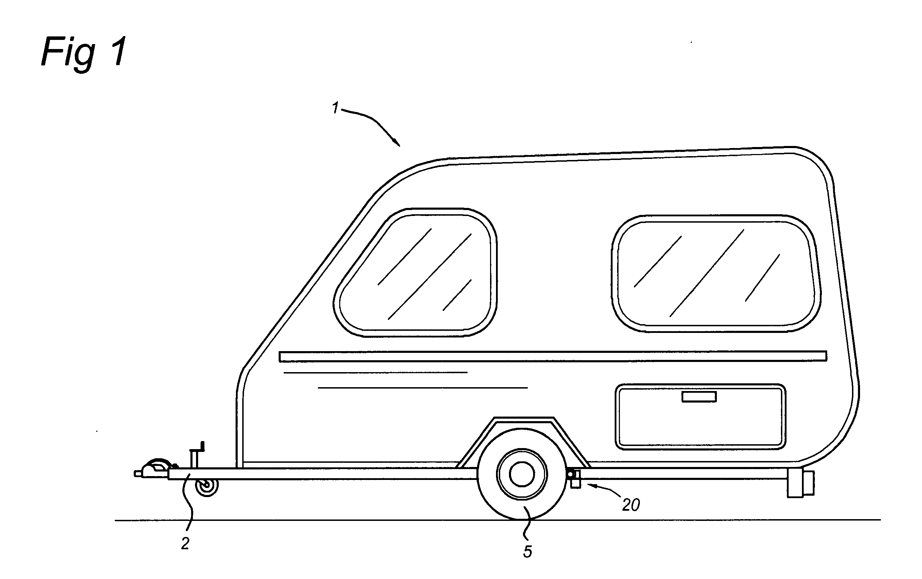

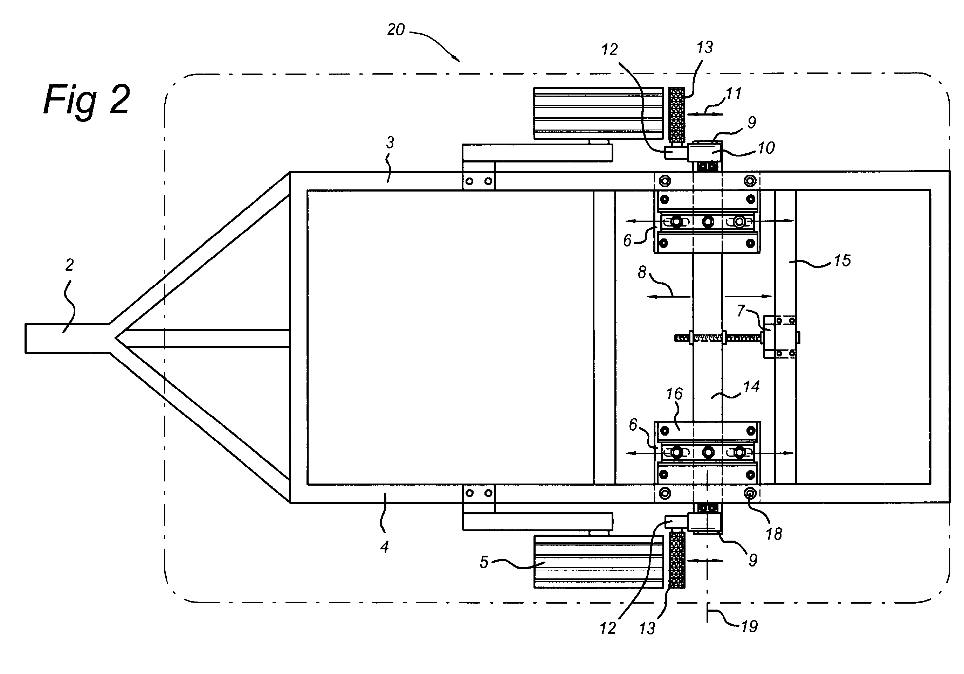

In Fig. 1, reference numeral 1 denotes a caravan. This caravan has a pole 2 which, as may be seen from Fig. 2, is connected to the chassis 3 consisting of longitudinal girders 4. It will be understood that the caravan can be provided with a different sort of chassis or support structure such as a box-shaped construction.

Wheels 5 are fastened to the chassis 3 on both sides via support arms (not indicated in greater detail) which can be driven by an auxiliary drive 20.

Fig. 2 shows details of said auxiliary drive 20. A fastening plate 6 is fastened to each longitudinal girder 4 of the chassis by bolts 18. A crossbar 14 is attached to this fastening plate 6 so as to be linearly displaceable in the direction of arrow 8. The longitudinal axis of this crossbar 14 is denoted by 19. A combination consisting of the drive roll 13 and motor 12 is fastened at each end 9 of the crossbar 14 via an adjustment mechanism 10 which, on the other hand, is fastened to the crossbar 14. A motor 7 is present on the chassis bar 15 of the chassis 3 and, on the one hand, engages on the crossbar 14 via a jack mechanism and, on the other hand, is in some manner connected to the bottom of the trailer such as a caravan.

Fig. 2 shows that the crossbar 14 is received in a sliding piece 16 which, as a result of the presence of slots 17, can be displaced back and forth in the direction of arrow 8 in Figure 2 with respect to the auxiliary frame which is embodied as the fastening plate 6.

The construction described hereinbefore functions as follows. During initial mounting, the fastening plate 6 is fastened to the longitudinal girders 4 by bolts 18. Optionally, this is done in the factory or fastening plates 6 are an integral part of the longitudinal girders 4. Subsequently, the crossbar 14 is attached to a sliding piece 16 and coupled to the motor 7. Sooner or later, both press-on rolls 13 and associated motors 12 are attached. Afterwards, the crossbar is moved to the position (shown) furthest removed from the wheel. Subsequently, the combination of the motor 12 and press-on roll 13 is moved with the adjustment mechanism 10 sufficiently far in the direction of arrow 11 toward the tyres 5 that, on the one hand, said combination is located at a safe distance from the tyres, thus ruling out the risk of any unexpected engagement, but, on the other hand, a slight displacement is all that is necessary in order to provide engagement. Subsequently, this mutual set position between the drive roll 13 and crossbar 14 is fixed. As a result of the subsequent operating of the motor 7, a slight displacement in the direction of arrow 8 in the direction of tyres 5 is all that is necessary in order to provide engagement between the drive rolls 13 and the tyres in question of the wheels 5. As a result, the motor can produce a comparatively high force in a comparatively short time. As a result of the rigidity of the crossbar 14, it is not necessary to take particular measures in order to be able to transmit the desired press-on force from the motor 7 to the roll 13. In addition, as a result of the transmitting, both to the left and to the right, of the press-on force of the rolls 13 in the chassis 3, the chassis 3 can be used without reinforcement.

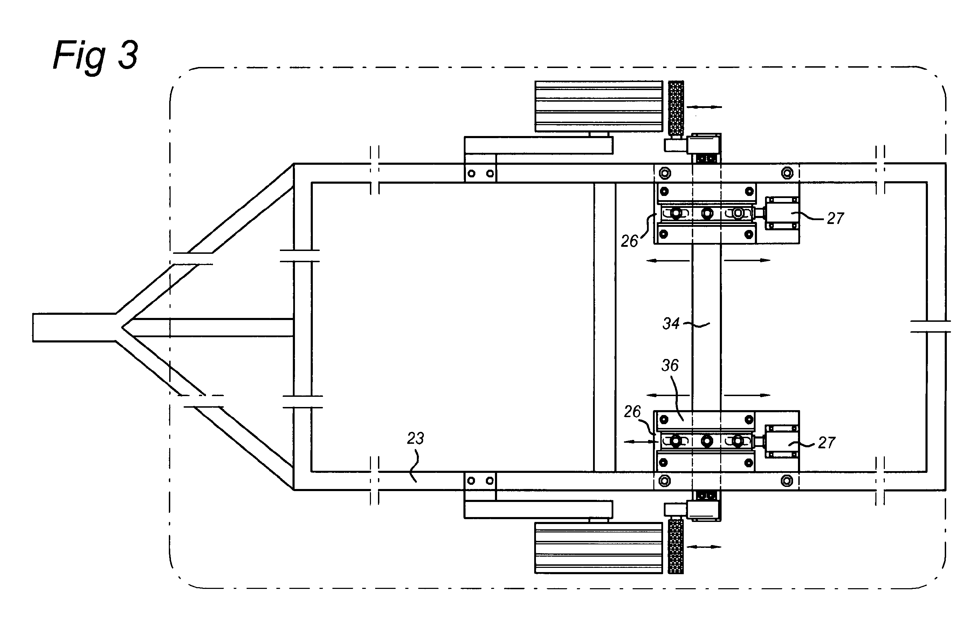

Fig. 3 shows a variant of the construction shown in Fig. 2. The crossbar 34 shown is displaceable with respect to the chassis 23. However, in contrast to the foregoing embodiment, no chassis bar 15 is present. The displacement of the bar 34 takes place with two motors 27 functioning between the fastening plates 26 and the sliding pieces 36. These motors can comprise a motor functioning with a jack. However, use may also be made of motors functioning with a piston/cylinder such as hydraulic or pneumatic structures.

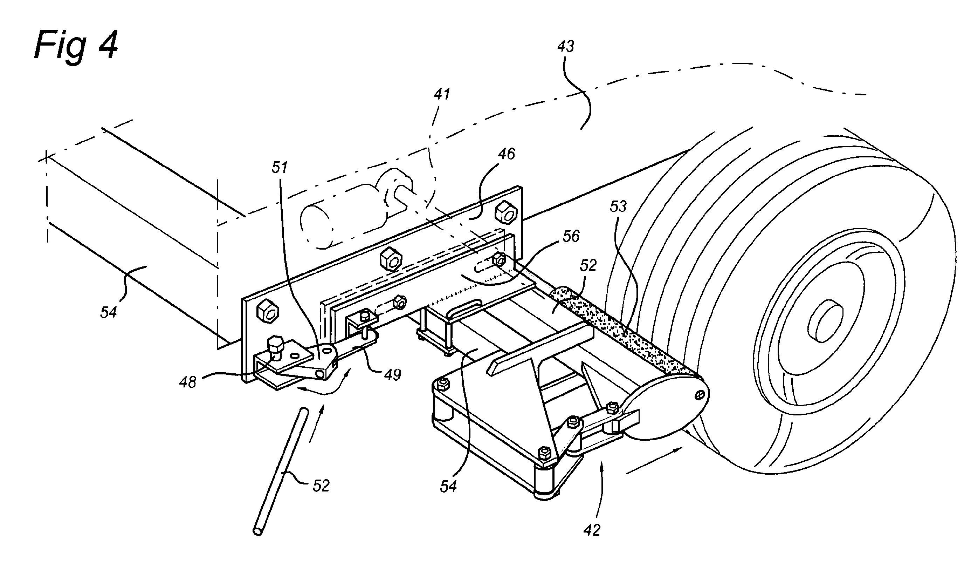

Fig. 4 shows a part of the auxiliary drive in a further variant according to the invention.
The bar 54, which can move back and forth with respect to the chassis 43, is in this example fastened to a sliding piece 56 which is attached to the chassis 43 via a fastening plate 46. A construction of this type is located on both sides of the chassis 43.
Operation takes place manually in this example. For this purpose, a tilting body 51 is hingingly attached to the fastening plate 46. On the one side, it is possible to insert therein an operating lever 52 protruding to outside the circumference of the caravan.
On the other hand, there is hingingly connected thereto a connecting arm 49 which is connected, again hingingly, to the sliding piece 56. A lock 48 is present. This can be used to lock the tilting body in the position in which the roll 53 is moved away from the wheel. Optionally, it is also possible to provide a lock in the press-on position shown in Fig. 4. This embodiment requires operation from the left and right sides.

The possibility described hereinbefore for adjustment between the motor/drive roll and crossbar consists in this exemplary embodiment of an actively operable construction. For this purpose, the drive motor 52 is attached with the drive roll 43 to a hinged arm 41 which is hingingly connected to the crossbar 54. On the other hand, a toggle lever mechanism 42 is present allowing the free end of the arm 41 to be displaced with respect to the crossbar 54 and in this way the position of the roll 53 to be displaced with respect to the chassis 43 or the wheel (not shown) respectively. Operation of the toggle lever mechanism can for example take place with the operating lever 52. In this manner there is a double adjustment which may be desirable if, for example, a substantial displacement of the roll 53 with respect to the wheel or chassis 43, respectively, is desirable. This may be the case in specific sorts of trailer structures in which there is a considerable wheel displacement during inward and outward suspension movement, resulting in a considerable component in the longitudinal direction so that the roll must be displaced over a considerable distance.

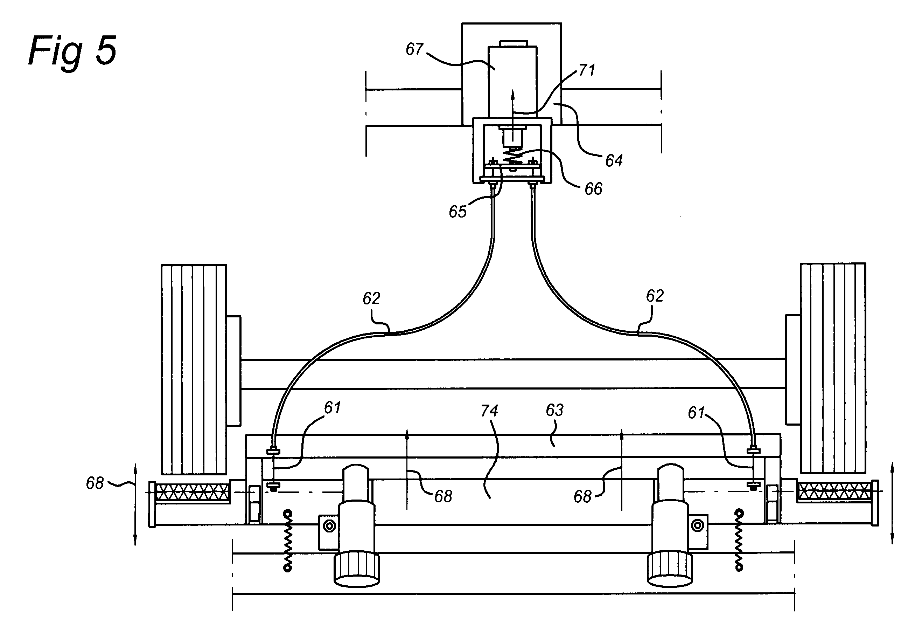

Fig. 5 illustrates a variant wherein the crossbar 74 must also be displaced with respect to the chassis (not shown in greater detail). Crossbars, which extend transversely with respect to the longitudinal girders of the chassis and are sturdily connected to the remaining part of the chassis, are all that are shown. Two outer cables 62 rest on the crossbar. Inner cables 61, which are connected to the displaceable crossbar 74, move in these outer cables. Furthermore the outer cables 62 rest on a plate 64 which is also securely connected to the chassis and to which a motor 67 is provided. The motor provides reciprocating movement of a yoke 65 in the direction of arrow 71. A spring 66 is present between the motor and the yoke 65. As a result of the displacing of the yoke 65 toward the motor, the crossbar 74 is moved in the direction of arrow 68 and a respective drive roll located thereon can in this way be pressed with the spring 66 in a resilient manner against the wheel so that slight changes in position of the wheel lead to an essentially different press-on force.

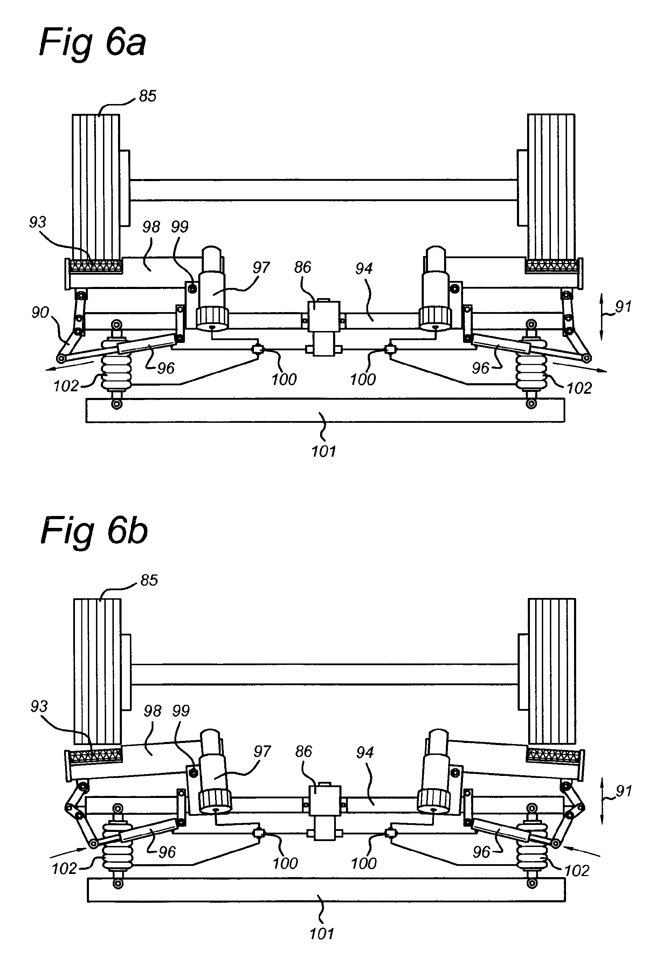

Fig. 6a, 6b show a further alternative of the invention. The wheels 85 of a caravan are driven by rolls 93. These rolls are driven by a motor 97. The motor 97 may be an electric, hydraulic or pneumatic motor. The motor 97 and roll 93 are attached to an arm 98 which can tilt about the hinge 99. The hinged fastening is fastened to the crossbar 94 which, with actuators 102, is connected to the crossbar 101 forming part of the chassis. These actuators are air bellows, for example.

The tilting arm 98 is operated by a tilting lever 90 which, in turn, is operated by a cylinder unit 96. The cylinder unit is powered from a motor 86. This may be a hydraulic or preferably pneumatic motor 86 which may or may not be provided with both the cylinder unit 96 and motor 97. A valve 100 is attached for this purpose. As is apparent on comparison of Fig. 6a and 6b, the tilting arm 98 can be moved back and forth between two different positions. As in the embodiment shown based on Fig. 4, the adjustment is a double adjustment in the longitudinal direction, the adjustment described hereinbefore resulting from tilting of the tilting arm 98 and also the slidability (not shown in detail) of the crossbar 94 with the actuators 102 in the direction of arrow 91.

It goes without saying that it is possible to provide single adjustability in the longitudinal direction by securely connecting the tilting arm 98 to the bar 94. A movement of the rolls from and to the wheel is then realized exclusively with the actuators 102.

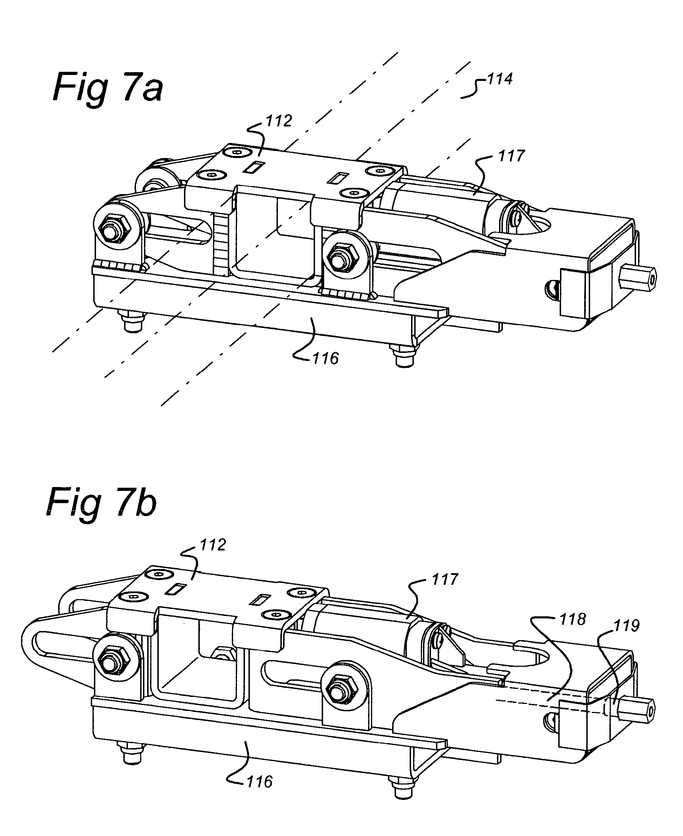

Fig. 7a and 7b show in two different positions a variant of the central drive motor 7 and 67 respectively shown in Fig. 2 and 5. This motor, which is denoted by 117, is securely fastened to an accommodation part 112 for the schematically sketched crossbar 114. This accommodation part 112 is slidable with respect to the auxiliary frame which is embodied as a fastening plate 116. The motor is provided with an internal nut which is driven by the motor and rotates and acts on the output shaft 118 while the fastening plate is provided with a locking plate 119 for securing the shaft 118 so that the accommodation part 112 is displaced back and forth as a result of rotation of the nut in the motor 117, as is apparent on comparison of Fig. 7a and 7b. The structure shown in Fig. 7 can be attached centrally with respect to the crossbar. However, it is preferable to provide the crossbar on both sides of a construction which is shown in Fig. 7 and then, in addition, guides the crossbar 114 with respect to the trailer. That is to say, the trailer can be attached directly adapted to the chassis bars either on the inside of the chassis, such as is shown in Fig. 2 with the fastening plate 6, or on the outside of the chassis, such as is shown in Fig. 4. Manual operation is possible by way of pressing on the locking plate 119 and rotating of the shaft 118.

It will be understood that the motor 117 can also be securely connected to the plate 116 and a nut construction can be present in the accommodation part 112.

It will be understood that a construction as shown in the earlier figures is present at the ends of the crossbar 114 for driving the wheels.

It will likewise be understood that parts of the auxiliary drive described hereinbefore can be supplied separately. According to the invention, this relates in particular the crossbar and the guide to which the crossbar is fastened, provided with a motor drive functioning therebetween.

After reading the foregoing description, the person skilled in the art will immediately think of variants which fall within the scope of the appended claims. In this regard, combinations may be made of the various components described hereinbefore.

## Claims

1. Auxiliary drive (20) for a trailer (1) such as a caravan, comprising a frame with a crossbar (14, 34, 54, 74, 94), a rotatable drive member (13, 33, 53, 73, 93) attached to each end (9) of said crossbar, with a drive motor (12, 32, 52, 72, 92) and displacement means for displacing that rotatable drive member in a direction (8) perpendicular to the longitudinal axis (19) of said crossbar, **characterized in that** said frame comprises an auxiliary frame (6) provided with fastening means (18) for fastening to a trailer, **in that** said crossbar is linearly displaceable with respect to that auxiliary frame, and **in that** said displacement means function between that auxiliary frame (6) and said crossbar (14) and comprise a motor-driven construction (7).

2. Auxiliary drive according to Claim 1, wherein that auxiliary frame comprises a sliding guide (16), attached close to each drive member, for said crossbar.

3. Auxiliary drive according to one of the preceding claims, wherein said displacement means comprise a manually operated construction.

4. Auxiliary drive according to one of the preceding claims, wherein said motor-driven construction (7) comprises two spaced electric motors.

5. Auxiliary drive according to one of the preceding claims, wherein the distance between said crossbar and said drive member (13) is adjustable (10).

6. Auxiliary drive according to Claim 5, wherein said distance is motor-adjustable.

7. Auxiliary drive according to one of the preceding claims, wherein displacement means are attached close to each drive member.

8. Trailer comprising a bottom part, to which an auxiliary frame (6) is fastened, of an auxiliary drive, which auxiliary drive comprises a frame with a crossbar (14), a rotatable drive member (13) attached to each end (9) of said crossbar, with a drive motor (12) and displacement means for displacing that rotatable drive member in a direction (8) perpendicular to the longitudinal axis (19) of said crossbar, wherein said frame comprises said auxiliary frame (6) provided with fastening means (18) for fastening to a trailer, in that said crossbar is linearly displaceable with respect to that auxiliary frame and in that said displacement means function between that auxiliary frame (6) and said crossbar (14) and comprise a motor-driven structure (7).

9. Trailer according to Claim 8, wherein that bottom part comprises a chassis (3).

10. Support structure for an auxiliary drive for a trailer, comprising a frame with a crossbar, said crossbar being provided at each end with fastening means for the fastening thereto of a drive motor (12, 32, 52, 72, 92) and with an auxiliary frame (6) provided with fastening means (18) for fastening to a trailer, **characterized in that** said support structure comprises a motor-driven structure (7), said crossbar (14, 34, 54, 74, 94) with said motor-driven construction being linearly displaceable with respect to said auxiliary frame.

## Patentansprüche

1. Hilfsantrieb (20) für einen Anhänger (1), z. B. einen Wohnwagen, mit: einem Rahmen mit einem Querträger (14, 34, 54, 74, 94), einem drehbaren Antriebsteil (13, 33, 53, 73, 93), das an jedem Ende (9) des Querträgers angebracht ist, mit einem Antriebsmotor (12, 32, 52, 72, 92) und einer Verschiebeeinrichtung zum Verschieben des drehbaren Antriebsteils in einer Richtung (8) senkrecht zur Längsachse (19) des Querträgers, **dadurch gekennzeichnet, dass** der Rahmen einen Hilfsrahmen (6) aufweist, der mit einer Befestigungseinrichtung (18) zum Befestigen an einem Anhänger versehen ist, dass der Querträger bezüglich des Hilfsrahmens geradlinig verschiebbar ist, und dass die Verschiebeeinrichtung zwischen dem Hilfsrahmen (6) und dem Querträger (14) wirkt und einen motorbetriebenen Aufbau (7) aufweist.

2. Hilfsantrieb nach Anspruch 1, wobei der Hilfsrahmen eine Gleitführung (16), die nahe jedem Antriebsteil angebracht ist, für den Querträger aufweist.

3. Hilfsantrieb nach einem der vorstehenden Ansprüche, wobei die Verschiebeeinrichtung einen handbetätigten Aufbau aufweist.

4. Hilfsantrieb nach einem der vorstehenden Ansprüche, wobei der motorbetriebene Aufbau (7) zwei beabstandete Elektromotoren aufweist.

5. Hilfsantrieb nach einem der vorstehenden Ansprüche, wobei der Abstand zwischen dem Querträger und dem Antriebsteil (13) einstellbar (10) ist.

6. Hilfsantrieb nach Anspruch 5, wobei der Abstand motoreinstellbar ist.

7. Hilfsantrieb nach einem der vorstehenden Ansprüche, wobei eine Verschiebeeinrichtung nahe jedem Antriebsteil angebracht ist.

8. Anhänger mit einem Unterteil, an dem ein Hilfsrahmen (6) befestigt ist, eines Hilfsantriebs, wobei der Hilfsantrieb aufweist : einen Rahmen mit einem Querträger (14), ein drehbares Antriebsteil (13), das an jedem Ende (9) des Querträgers angebracht ist, mit einem Antriebsmotor (12) und einer Verschiebeeinrichtung zum Verschieben des drehbaren Antriebsteils in einer Richtung (8) senkrecht zur Längsachse (19) des Querträgers, wobei der Rahmen den Hilfsrahmen (6) aufweist, der mit einer Befestigungseinrichtung (18) zum Befestigen an einem Anhänger versehen ist, wobei der Querträger bezüglich des Hilfsrahmens geradlinig verschiebbar ist und die Verschiebeeinrichtung zwischen dem Hilfsrahmen (6) und dem Querträger (14) wirkt und einen motorbetriebenen Aufbau (7) aufweist.

9. Anhänger nach Anspruch 8, wobei das Unterteil ein Fahrwerk (3) aufweist.

10. Tragaufbau für einen Hilfsantrieb für einen Anhänger, mit: einem Rahmen mit einem Querträger, wobei der Querträger an jedem Ende mit einer Befestigungseinrichtung zum Befestigen eines Antriebsmotors (12, 32, 52, 72, 92) daran versehen ist, und mit einem Hilfsrahmen (6), der mit einer Befestigungseinrichtung (18) zum Befestigen an einem Anhänger versehen ist, **dadurch gekennzeichnet, dass** der Tragaufbau einen motorbetriebenen Aufbau (7) aufweist, wobei der Querträger (14, 34, 54, 74, 94) mit dem motorbetriebenen Aufbau bezüglich des Hilfsrahmens geradlinig verschiebbar ist.

## Revendications

1. Entraînement auxiliaire (20) pour une remorque (1) telle qu'une caravane, comprenant un cadre comportant une barre transversale (14, 34, 54, 74, 94), un organe rotatif d'entraînement (13, 33, 53, 73, 93) relié à chaque extrémité (9) de ladite barre transversale, présentant un moteur d'entraînement (12, 32, 52, 72, 92) et des moyens de déplacement conçus pour déplacer ledit organe rotatif d'entraînement dans une direction (8) perpendiculaire à l'axe longitudinal (19) de ladite barre transversale, **caractérisé en ce que** ledit cadre comprend un cadre auxiliaire (6) muni de moyens de fixation (18) pour la fixation à une remorque, **en ce que** ladite barre transversale est déplaçable linéairement par rapport audit cadre auxiliaire, et **en ce que** lesdits moyens de déplacement sont opérants entre ledit cadre auxiliaire (6) et ladite barre transversale (14) et comprennent une structure (7) à entraînement par moteurs.

2. Entraînement auxiliaire selon la revendication 1, dans lequel ledit cadre auxiliaire comprend un guide coulissant (16) relié à proximité de chaque organe d'entraînement affecté à ladite barre transversale.

3. Entraînement auxiliaire selon l'une des revendications précédentes, dans lequel lesdits moyens de déplacement comprennent une structure à actionnement manuel.

4. Entraînement auxiliaire selon l'une des revendications précédentes, dans lequel ladite structure (7) à entraînement par moteurs comprend deux moteurs électriques espacés.

5. Entraînement auxiliaire selon l'une des revendications précédentes, dans lequel la distance entre ladite barre transversale et ledit organe d'entraînement (13) est réglable (10).

6. Entraînement auxiliaire selon la revendication 5, dans lequel ladite distance est réglable par moteur.

7. Entraînement auxiliaire selon l'une des revendications précédentes, dans lequel des moyens de déplacement sont reliés à proximité de chaque organe d'entraînement.

8. Remorque comprenant une partie de fond à laquelle est fixé un cadre auxiliaire (6) d'un entraînement auxiliaire, lequel entraînement auxiliaire comprend un cadre comportant une barre transversale (14), un organe rotatif d'entraînement (13) relié à chaque extrémité (9) de ladite barre transversale, présentant un moteur d'entraînement (12) et des moyens de déplacement conçus pour déplacer ledit organe rotatif d'entraînement dans une direction (8) perpendiculaire à l'axe longitudinal (19) de ladite barre transversale, dans laquelle ledit cadre comprend ledit cadre auxiliaire (6) muni de moyens de fixation (18) pour la fixation à une remorque, ladite barre transversale est déplaçable linéairement par rapport audit cadre auxiliaire, et lesdits moyens de déplacement sont opérants entre ledit cadre auxiliaire (6) et ladite barre transversale (14) et comprennent une structure (7) à entraînement par moteurs.

9. Remorque selon la revendication 8, dans laquelle ladite partie de fond comprend un châssis (3).

10. Structure de support pour un entraînement auxiliaire pour une remorque, comprenant un cadre comportant une barre transversale, ladite barre transversale étant munie, à chaque extrémité, de moyens de fixation pour la fixation rapportée d'un moteur d'entraînement (12, 32, 52, 72, 92), et présentant un cadre auxiliaire (6) muni de moyens de fixation (18) pour la fixation à une remorque, **caractérisée en ce que** ladite structure de support comprend une structure (7) à entraînement par moteurs, ladite barre transversale (14, 34, 54, 74, 94) étant déplaçable linéairement avec ladite structure à entraînement par moteurs par rapport audit cadre auxiliaire.
